**Europäisches Patentamt**

**European Patent Office**

**Office européen des brevets**

(19)

(11) Publication number : **0 481 808 A2**

# (12) EUROPEAN PATENT APPLICATION

(21) Application number : **91309635.0**

(22) Date of filing : **18.10.91**

(51) Int. Cl.⁵ : **G06F 15/68**

(30) Priority : **18.10.90 JP 280333/90**
**19.10.90 JP 281662/90**

(43) Date of publication of application :
**22.04.92 Bulletin 92/17**

(84) Designated Contracting States :
**DE FR GB**

(71) Applicant : **FUJITSU LIMITED**
**1015, Kamikodanaka Nakahara-ku**
**Kawasaki-shi Kanagawa 211 (JP)**

(72) Inventor : **Itoh, Seiichi**
**1-29-2, Ikuta, Tama-ku**
**Kawasaki-shi, Kanagawa, 214 (JP)**

(74) Representative : **Fane, Christopher Robin King**
**et al**
**HASELTINE LAKE & CO. Hazlitt House 28**
**Southampton Buildings Chancery Lane**
**London, WC2A 1AT (GB)**

(54) **Image processing device and image processing method.**

(57) Prior to a binary conversion process on a gray-scale image, a user predetermines a binary conversion threshold corresponding to original image density data and stores it in a binary conversion threshold storage unit. In the binary conversion process, the user applies the original image density data to an image processing unit. A binary conversion threshold setter reads a corresponding binary conversion threshold from the binary conversion threshold storage unit based on the original image density data, and the binary conversion processing unit performs a binary conversion process of the original density data based on the minimized average error method using the binary conversion threshold. Thus, the present invention enables desirable reproduction of drawings including characters, eliminating grain noises, and obtaining a high quality image both in drawings and gray-scale portions. The operational error reducer reduces operational errors generated in an average error operation performed in the minimized average error method, and minimizes the deterioration in gradation caused by an operational error.

Fig. 1

EP 0 481 808 A2

Background of the Invention

Field of the Invention

The present invention relates to an image processing device and image processing method for storing a binary conversion threshold variable depending on image density data, setting the binary conversion threshold according to the density data, and reducing operational errors in average error operation in a binary conversion process in utilizing a minimized average error method.

Description of the Related Art

In a digital image process, a conventional "ordered dither method" is widely used for generating a gray-scale pseudo image. In this method, periodical random numbers or pseudo-random numbers (for example, in Bayer's pattern) are superposed onto a gray-scale image, and then represented in binary data. As this method simplifies the hardware configuration, it realizes a gray-scale pseudo image process (representation) at a lower cost. However, it has some disadvantages as follows:

1 When an original image is formed of fine dots in printed copies, for example, the resultant image often shows a periodical stripe (a so called "moire") which is not found in the original image.

2 When an original image contains characters and drawings, the resultant image shows a broken line and a curve at thes portions, thereby resulting in exceedingly inferior reproductivity.

3 When a matrix is enlarged to obtain a multigradation function for the resolution capabilities of a reading system, the resolution is deteriorated, thus disabling the realization of multi-gradation and high-level-resolution, simultaneously.

Therefore,"a minimized average error method" has been suggested which enables the realization of multigradation and high-level-resolution compatibly. This method was disclosed by Manfred R. Schroeder in "Images from Computers", IEEE Spectrum, vol.6, pp.66-78, 1969, and then improved by J. F. Jarvis, C. N. Judice, and W. H. Ninke. The improved method is published in "A Survey of Techniques for the Display of Continuous Tone Pictures on Bilevel Display," Computer Graphics and Image Processings, vol.5 pp.13-40, 1976.

In the minized average error method, a binary conversion error value (difference) of a picture element of intermediate density is obtained as obtained for picture elements of maximum and minimum density, and the binary conversion error value is supplemented by correcting it with the density of picture elements surrounding the picture elements of intermediate density, thereby equalizing the density of the original image with that of the outputted image.

That is, binary conversion error information generated for picture elements surrounding a target picture element is calculated and stored; weight coefficients of binary conversion errors generated in the surrounding picture elements are stored; the sum (which is called the sum of binary conversion error weight) of results each obtained by multiplying each of the binary conversion errors of surrounding picture elements by each of the weight coefficients is divided by the sum of the weight coefficients and then an average error value is calculated; the density information of the target picture element is corrected by the average error value; and the corrected value is converted to a binary value. An error may be generated during the conversion to a binary value (referred to as binary conversion error), and it is calculated and stored for future use. Binary data can be obtained by repeating the above described procedure for the whole image space, and a gray-scale pseudo image can be obtained by displaying and printing these binary data.

As described above, the minimized average error method prevents the gradation steps for display from being determined simply according to the matrix size as in the ordered dither method, and also prevents more from being generated. Therefore, the minimized average error method is evaluated as having merits in gradation and resolution. However, it has the following problems:

1 It is inferior to the simple binary process in the reproductivity of characters and drawings.

2 Dot appearance is specially delayed for picture elements of lower density (such as loss or tapering at end points).

3 Grain noises can be generated at a completely black portion or a background portion as a result of recognizing fine noises (dust, fold, etc.) of an original image as an error.

As described above, the minimized average error method has the problem that a high and desirable quality of images cannot be reproduced in the drawings including characters and in the portion of intermediate gradation such as images in photography.

Furthermore, in the minimized average error method, every weight coefficient and binary conversion error is represented as an integer, and all decimal places are truncated for efficient operation. However, it has a problem that the truncation causes deterioration in gradation due to an operational error. That is, the operational error due to the truncation causes greater deterioration in gradation of a gray-scale pseudo image than for a gray-scale pseudo image obtained by the operation with real numbers.

Summary of the Invention

An object, of the present invention is to guarantee a high quality image in drawings including characters, etc. and in gray-scale portions such as images in photography.

Another object of the present invention is to minimize operational errors event in the integer operation for a high speed process, thereby providing an image processing unit and an image processing method capable of generating a gray-scale pseudo image with the least deterioration in gradation.

The present invention relates to an image processing unit and an image processing method comprising a quantizer for converting image input to density data of each image, and a binary conversion processing unit utilized in the minimized average error method for binary-processing picture elements.

It comprises a binary conversion threshold storage unit for storing a binary conversion threshold used for performing a binary conversion process in the binary conversion processing unit in the minimized average error method in association with a density data value of an original image.

It further comprise a binary conversion threshold setter for reading a binary conversion threshold corresponding to the density data of an original image from the binary conversion threshold storage, and for transmitting the threshold to the binary conversion processing unit utilized in the minimized average error method.

In addition to the above described configuration, the present invention comprises, in the binary conversion processing unit utilized in the minimized average error method, an operational error reducer for reducing operational errors occurring in the operation where an average error value is obtained.

In the above configuration of the present invention, an image is inputted as a gray-scale image. Each image element is converted to specific density data (for example, in 256-step gradation) by a quantizer comprising an A/D converter, for example. A binary conversion threshold stored in the binary conversion threshold storage unit is predetermined as density data. The binary conversion thresheld setter reads a corresponding threshold from the binary conversion threshold storage unit using, for a binary conversion process of one picture element, original image density data of the picture element or using an average value of original image density data of one picture element and of a plurality of specified picture elements surrounding the picture element, and then transmits the threshold to the binary conversion processing unit utilized in the minimized average error method.

The operational error reducer modifies or corrects errors attributed to a truncating process to be performed in the average error operation.

According to the configuration of the present invention as described above, the reproduction of drawings including characters can be improved by permitting a binary conversion threshold to be variable dependent on original image density data, thus eliminating grain noises and ensuring ahigh quality image in both drawing portions and gray-scale portions.

Besides, the operational error reducer corrects errors due to the truncation in the operation, thereby eliminating the deterioration in gradation.

Brief Description of the Drawings

Other objects and features of the present invention can be easily recognized using the attached drawings and description of preferable embodiments of the present invention.

Figure 1 shows a block diagram for explaining the principle of the present invention;

Figure 2 shows an explanatory view of a look-up table;

Figure 3 shows a view for explaining the principle of the operational error reducer;

Figure 4 shows a configuration of a preferable embodiment;

Figure 5 shows the results of processes performed on a preferable embodiment;

Figure 6 shows the results of processes performed in the conventional minimized average error method;

Figure 7 shows a configuration of the first embodiment of the average error operation unit;

Figure 8 shows an explanatory view of a reference table between a sum of binary conversion error weight values and a correction value for a sum of weight values;

Figure 9 shows a configuration of the second embodiment of the average error operation unit;

Figure 10 shows a configuration of the third embodiment of the average error operation unit.

Description of the Preferred Embodiments

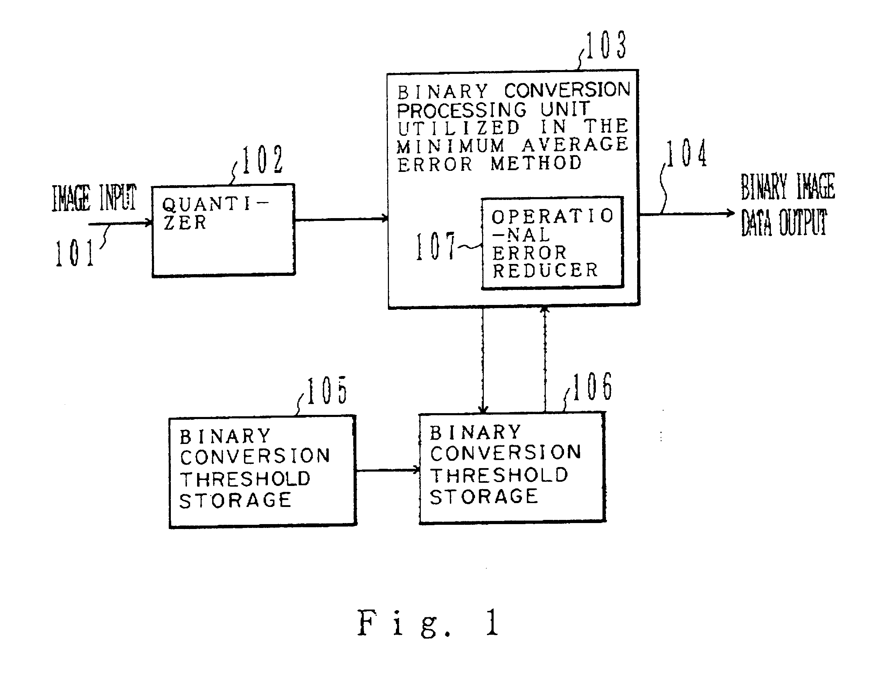

Figure 1 shows a block diagram for explaining the principle of the present invention. The present invention

3

comprises a quantizer 102 for converting gray-scale image input 101 read from an input unit such as a scanner, etc. to digital data (density data); and a binary conversion processing unit utilized in the minimized average error method 103 for outputting the data as binary image data output 104. The quantizer 102 can comprise an A/D converter, for example. The binary conversion processing unit utilized in the minimized average error method 103 can be operrated by a computer system comprising a CPU and a memory. The binary image data output 104 is image output based on the binary process and outputted by a printer, display, etc. Binary data are represented in 1 or 0, the former being outputted as black picture elements (of the highest density) and the latter as white picture elements (of the lowest density).

A binary conversion threshold storage 105 provided in this computer system is a table for storing binary conversion thresholds to be used by the minimized average error method 103 in correspondence with the original image density data after it is quantized. Binary thresholds are stored in this table prior to the image process. If the quantization is conducted in 256-step gradation in the range from 0 to 255 grade, binary conversion thresholds are represented also in 256-step gradation.

A binary conversion threshold setter 106 provided in a computer system obtains density data for a picture element quantized by the quantizer 102 through the binary conversion processing unit utilized in the minimized average error method 103, reads binary conversion threshold corresponding to the density data from a binary conversion threshold storage 105, and then returns the binary conversion threshold to the binary conversion processing unit utilized in the minimized average error method 103. The binary conversion processing unit utilized in the minimized average error method 103 conducts a binary process on the gray-scale density data using a binary conversion threshold.

On the other hand, an operational error reducer 107 provided in the binary conversion processing unit utilized in the minimized average error method 103 reduces errors generated during the averaging operation performed in the minimized average error method. The operational error reducer 107 is explained in detail later.

The operation of th above described principle is explained as follows:

A user instructs an input unit such as scanner, etc. to read the image input 101 such as photographs comprising gray-scale images. The scanner repeats scanning in the primary and secondary scanning directions. Thus, original image data are obtained for each picture element arranged in the form of a two-dimensional plane. The original data are applied to the quantizer 102. The quantizer 102 quantizes the density of each picture element (picture elements of each line and each dot forming the image input 101) in the image input 101, and then obtains density data. Data are quantized to 8-bit data, for example. The quantized density data are surrounded by the computer system, and stored in the binary conversion processing unit utilized in the minimized average error method 103.

The binary conversion processing unit utilized in the minimized average error method 103 transmits original image density data of stored picture elements to the binary conversion threshold setter 106 to binary-process the picture elements.

The binary conversion threshold setter 106 receives original image density data and obtains a binary conversion threshold referring to the binary conversion threshold storage unit 105. Then, it transmits the binary conversion threshold to the binary conversion processing unit utilized in the minimized average error method 103.

In the binary conversion threshold storage unit 105, the larger the original density data are, the smaller the assigned binary conversion threshold is. In this case, a binary conversion threshold corresponding to a comparatively small volume of original image density data as a result of reading fine noises indicates a rather large value.

The binary conversion processing unit utilized in the minimized average error method 103 uses a binary conversion threshold as a threshold, and binary-processes a picture element using the minimized average error method. In the previous example, as a comparatively small volume of original image density data are assigned a comparatively large binary conversion threshold, the original density data can be smaller than expected by the assigned binary conversion threshold. Therefore, as a result of a binary process, the picture elements are white picture elements, that is, they indicate the minimum density (the smaller value of the minimum density and the maximum density). Therefore, an influence of fine noises, etc. of an original image can be eliminated, thus minimizing the possibility of grain noises being generated.

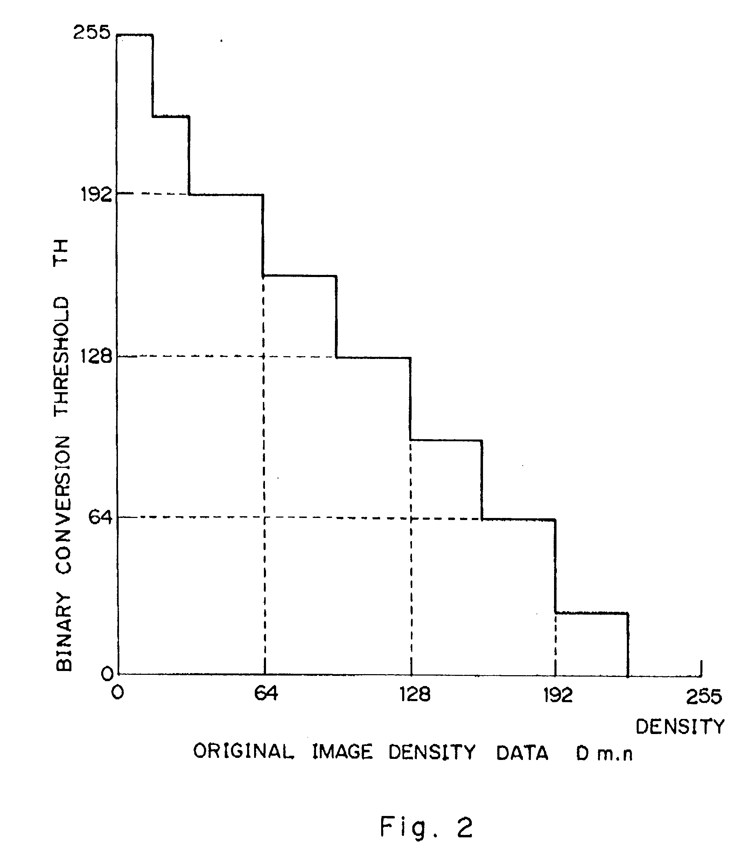

Figure 2 shows a view for explaining the relation between original image density data and binary conversion thresholds.

As shown in Figure 2, the relation between original image density data and binary conversion thresholds is described using the gradation. For example, when original density data are in 64, 128, and 192 grade in gradation, binary conversion thresholds are 192, 128, and 64, respectively. For example, when original image density data show 128 grade, the corresponding binary conversion threshold can be 128 or 96 optionally.

The binary conversion threshold storage 105 has a table configuration for storing gradation values indicating binary conversion thresholds corresponding to each grade of original image density data. That is, the binary conversion threshold storage unit 105 is a conversion table for receiving original image density data and outputting binary conversion thresholds.

In this table, the larger the original image density data, the smaller the assigned binary conversion threshold. That is, as shown in Figure 2, a binary conversion threshold corresponding to original image density data is not fixed as a binary conversion threshold used in the conventional minimized average error method, but is variable in inverse proportion to the original image density data, thus actually eliminating the generation of grain noises.

In Figure 2, when original image density data show 64 - 192 grade in gradation (intermediate density portion), a binary conversion threshold is incremented or decremented by 32 grades each time the original image density data are varied by 32 in gradation. The variation can be defined for more steps. In the range of 0 - 64 grade in gradation of original image density data, a binary conversation threshold can be varied for three steps (more steps than in the intermediate density portion), while in the range over 224 grade in gradation, a binary conversion threshold is set to 0, thereby preventing loss or tapering at end points and improving the productivity of drawings including characters, etc.

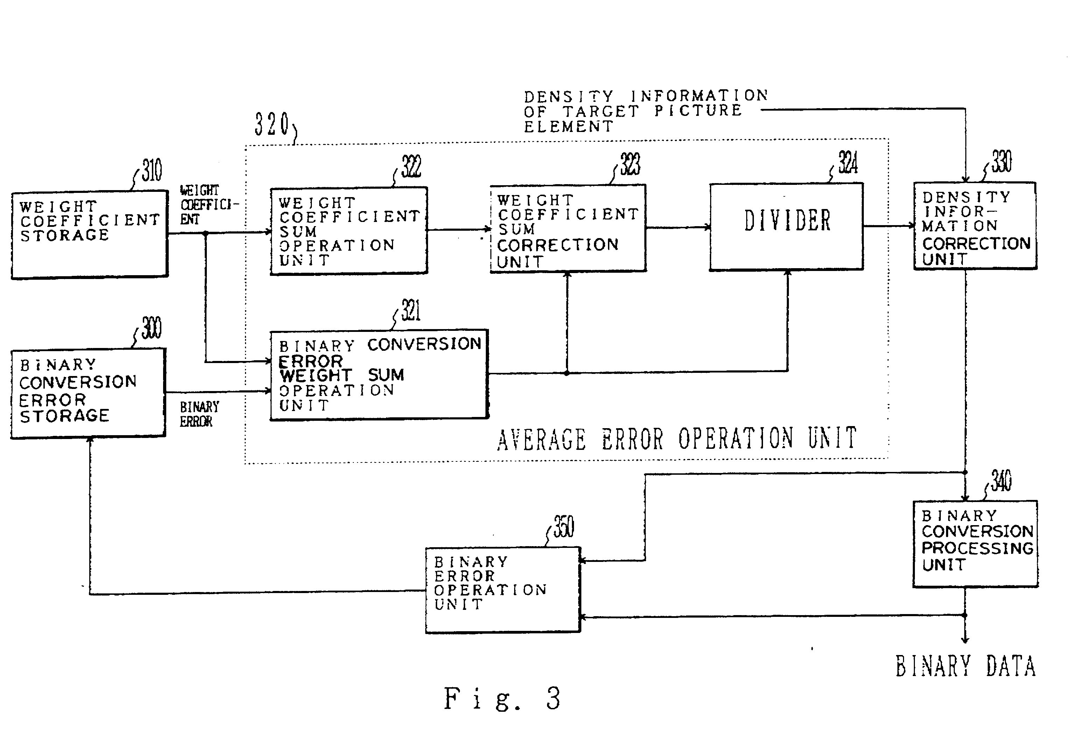

Next, the principle of the operational error reducer 107 shown in Figure 1 is explained. Figure 3 shows a principle configuration of the binary conversion processing unit utilized in the minimized average error method 103 including the operational error reducer 107.

300 indicates a binary conversion error storage unit for storing binary conversion error information generated at picture elements surrounding a target picture element; 310 indicates a weight coefficient storage unit for storing weight coefficients of binary conversion errors generated at picture elements surrounding a target picture element; 320 indicates an average error operation unit for calculating average error values to modify density data of a target picture element; 330 indicates a density information correction unit or modifier for modifying density data of a target picture element using an average error value obtained by the average error operation unit 320; 340 indicates a binary conversion processing unit for binary-processing based on modified density data of a target picture element obtained by density information modifier 330; and 350 indicates a binary conversion error operation unit for calculating binary conversion error values of a target picture element.

In the average error operation unit 320, 321 indicated a binary conversion error weight sum operation unit for calculating a sum (a sum of binary conversion error weight values) of products of a binary conversion error value of each surrounding picture element represented as an integer multiplied by a weight coefficient; 322 indicates a weight coefficient sum operation unit for calculating a sum of weight coefficients; 323 indicates a weight coefficient sum correction unit or modifier for modifying a sum of weight coefficients based on a sum of binary conversion error weight values; 324 indicates a divider for dividing a sum of binary conversion error weight values by a sum of weight coefficients and outputting a result as an average error value.

The operation of the above described principle configuration is described as follows:

A weight coefficient stored in the weight coefficient storage unit unit 310 stored before being processed. A binary process performed in the minimized average error method is performed sequentially from the first picture element of the first line. Every time a binary process of a picture element is performed, binary conversion error information is obtained and stored in the binary conversion error storage unit 300. As a result, in a binary process of one target picture element, a binary conversion error value of a surrounding picture element which is binary-processed before the target picture element is stored in the binary conversion error storage 300.

When density data of a target picture element is binary-processed, a sum of products of a binary conversion error value of a surrounding picture element multiplied by a weight coefficient is calculated by the binary conversion error weight sum operation unit 321, and a sum of weight coefficients is calculated by the weight coefficient operation unit 322.

Conventionally, an average error value can be obtained by dividing a sum of binary conversion error weight value by a sum of weight coefficients, and then truncating all decimal places in integer operation. The truncation generates an operational error, thus deteriorating the quality of resultant binary images. In the present invention, a sum of weight coefficients is modified based on a sum of binary conversion error weight values such that an error value (difference from a result of real number operation) after the truncation of decimal places in integer operation is equal to or smaller than 0.5. When a modified value of a weight coefficient is obtained, a sum of binary conversion error weight values is divided by the modified value by the divider 324, and the result is outputted as an average error.

Next, the density information modifier 330 modifies density information of a target picture element by an average error obtained by the average error operation unit 320, and the binary conversion processing unit 340 binary-processes the density data based on the modified density information. The binary conversion error operation unit 350 calculates the difference between density information and modified density information assuming 255 as "1" and 0 as "0" if the density information is represented in 8 bits, and then stores the result in the binary

5

EP 0 481 808 A2

conversion error storage unit 300.

A gray-scale pseudo image can be obtained by repeating the above described procedure on the whole image.

Thus, an error value generated by truncation can be supplemented by modifying a sum of weight coefficients so that the truncation error is equal to or smaller than 0.5 even in the integer operation, thereby preventing the deterioration in gradation.

A truncation error can be made equal to or smaller than 0.5 to eliminate the deterioration in gradation also by rounding up a value equal to or larger than 0.5 or 0.6 to keep an average error as the value plus 1 or the value as is depending on whether or not the remainder of the division of a sum of binary conversion error weights divided by a sum of weight coefficients is larger than the divisor (a total sum of weight coefficients).

Preferred embodiments are explained in association with the attached drawings as follows:

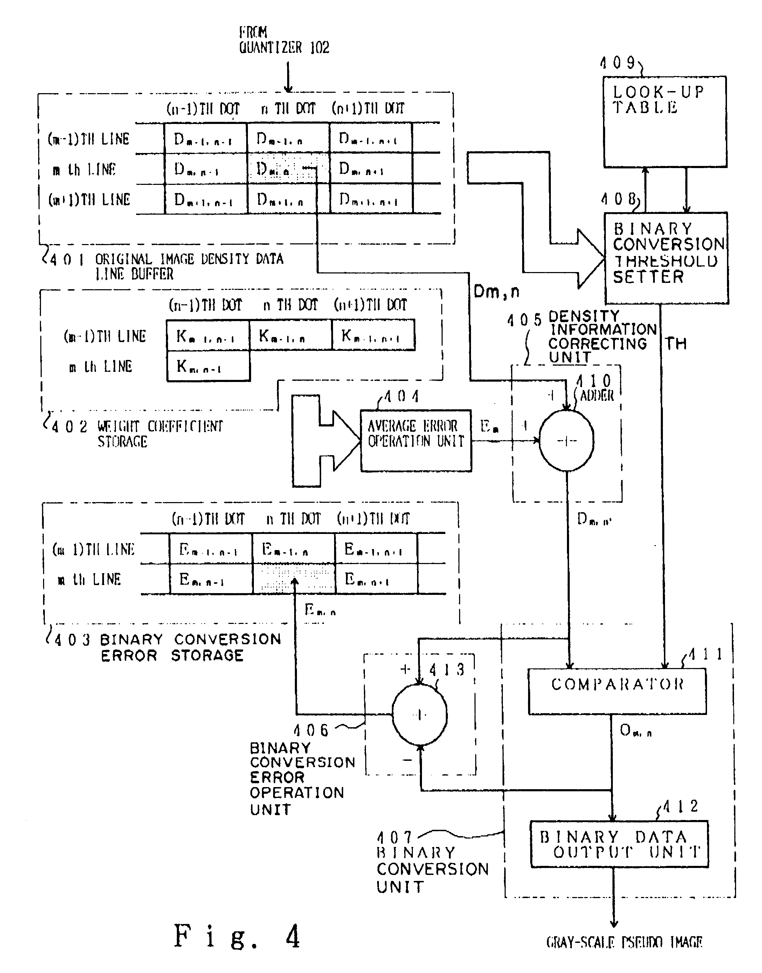

Figure 4 shows a configuration of an embodiment of the present invention.

The system of this embodiment comprises an original image density data line buffer 401, a weight coefficient storage unit 402, a binary conversion error storage unit 403, an average error operation unit 404, a density information modifier 405, a binary conversion error operation unit 406, a binary conversion processing unit 407, a binary conversion threshold setter 408, and a look-up table 409. The binary conversion threshold setter 408 and the look-up table 409 are new parts specific to the present invention, and all the other parts the same as those configured in the image processing system in the minimized average error method.

The original image density data line buffer 401 comprises a memory such as a RAM, i.e. a buffer for storing density data digitized for each picture element by the quantizer 102. The binary conversion error storage unit 403 also comprises a memory such as a RAM, etc. and stores error values for each picture element generated in the binary process of original image density data. The weight coefficient storage unit 402 also comprises a memory and stores weight coefficients used for the minimized average error method.

The look-up table 409 corresponds to the binary conversion threshold storage unit 105 shown in Figure 1, and stores a binary conversion threshold corresponding to its original image density data.

First, a binary process utilized in the minimized average error method is explained briefly.

Assume that the nth picture element (dot) in the primary scanning direction in the image space and picture elements of the mth line in the secondary scanning direction are considered for a binary process. The original image density data $D_{m,n}$ of a target picture element $P_{m,n}$ is quantized by any of the values from the minimum density to the maximum density.

A binary conversion error value generated at picture elements surrounding the target picture element which is already subjected to a binary-processing and to a storage is read to obtain a weight average value based on a predetermined weight coefficient. This value is added to the original image density data $D_{m,n}$ of the target picture element $P_{m,n}$ to obtain the modified data $D_{m,n}$. The result, after being compared wiht a binary conversion threshold TH, is binary-processed (a value equivalent to the maximum density or the minimum density), thereby providing binary data. The difference generated in the binary process is stored as a binary conversion error $E_{m,n}$.

The above procedure is repeated for the whole image space to obtain binary data which are binary-processed in the minimized average error method, and to obtain a gray-scale pseudo image throught displaying and printing the binary data.

Next, a binary process of the embodiment is explained as follows:

The image input 101 is original image data applied by an input unit such as a scanner, etc., and can be read by N (integer) dots of line type image sensors arranged in the primary scanning direction. The quantizer 102 quantizes the original image data depending on the density to obtain original image density data $D_{m,n}$ for each picture element. The binary conversion processing unit utilized in the minimized average error method 103 stores the density data at the point corresponding to each picture element in the original image density data line buffer (hereinafter referred to as a buffer) 401. The buffer 401 comprises a random access memory RAM. m and n show positive integers in the range of $1 \leqq n \leqq N$.

After storing data in the buffer 401, the binary conversion processing unit utilized in the minimized average error method 103 transmits to the binary conversion threshold setter 408 original image density data $D_{m,n}$ of a target picture element $P_{m,n}$ or original image density data of a target picture element $P_{m,n}$ and picture elements surrounding the target picture element (for example, eight surrounding picture elements shown by the buffer 401 in Figure 4).

The binary conversion threshold setter 408 refers to the look-up table 409 using original image density data to obtain a corresponding binary conversion threshold TH.

If original image density data of a picture element is transmitted to the binary conversion threshold setter 408, a binary conversion threshold TH can be obtained directly from original image density data of the corresponding picture element. Suppose that an original image contains fine noise such as dust, folds, etc. read

6

from an original image, the density can be comparatively low (for example, equal to or smaller than grade 64 in gradation). To eliminate such noise, smaller original image density data must be assigned a larger binary conversion threshold TH in the look-up table 409. Noise is cleared when a binary process is performed on it according to the predetermined large binary conversion threshold TH. Therefore, grain noise can be minimized in the background portion, etc.

If original image density data of a plurality of picture elements are transmitted to the binary conversion threshold setter 408, the binary conversion threshlod setter 408 obtains an average value of these density data and refers to the look-up table 409 using this average value. Therefore, the original image density data $D_{m,n}$ of a target picture element $P_{m,n}$ is modified by original image density data ($D_{m-1,n-1}$) of eight picture elements ($P_{m-1,n-1}$) surrounding the target picture element. For example, if a target picture element $P_{m,n}$ comprises fine noise read from an original image, the density of eight surrounding picture elements is considered extremely low. Therefore, the original image density data $D_{m,n}$ is modified to a smaller value, thereby reducing the generation of grain noise in the background portions. Then, the generation of grain noise can be eliminated almost completely by referring to the look-up table 409 using these modified original image density data. The binary conversion threshold setter 408 transmits the obtained binary conversion threshold TH to the binary conversion unit 407.

On the other hand, the average error operation unit 404 obtains an average weight value. The average error operation unit 404 reads a weight coefficient corresponding to a target picture element $P_{m,n}$ from the weight coefficient storage unit 402. That is, a weight coefficient ($K_{m-1,n-1}$, etc.) for each binary conversion error value generated at each picture element surrounding the target picture element $P_{m,n}$ is read. A binary conversion error value ($E_{m-1,n-1}$, etc.) generated at each picture element which is already subjected to a binary conversion processing is read from binary conversion error storage 403. The binary process is performed in the order of the (n-1)th dot of the (m-1)th line, the nth dot, the (n+1)th dot, ..., the (n-1)th dot of the mth line, the nth dot...sequentially. In this case, the binary-conversion processed picture elements are $P_{m-1,n-1}$, $P_{m-1,n}$, $P_{m-1,n+1}$, and $P_{m,n-1}$. Accordingly, data read from the weight coefficient storage unit 402 and the binary conversion error storage unit 403 are the data corresponding to these four picture elements.

Next, the average error operation unit 404 obtains a weight average from the above indicated data read from the storage units. A weight average value can be obtained from the following expression:

A weight average value =

$$(K_{m-1,n-1} \cdot E_{m-1,n-1} + K_{m-1,n} \cdot E_{m-1,n} + K_{m-1,n+1} \cdot E_{m-1,n+1} + K_{m,n-1} \cdot E_{m,n-1}) / (K_{m-1,n-1} + K_{m-1,n} + K_{m-1,n+1} + K_{m,n-1})$$

Then, the binary conversion processing unit utilized in the minimized average error method 103 transmits a weight average value calcultated by an average error operation unit 404 to the density information correcting unit 405, and performs a process of modifying density data of a target picture element $P_{m,n}$. The density information modifier 405 comprises an adder 410. The adder 410 receives density data $D_{m,n}$ read from the buffer 401 for a target picture element $P_{m,n}$, and also receives an average error value $E_m$ from the average error operation unit 404. The adder 410 adds these values, outputs corrected density data $D_{m,n}$, and then transmits the result to the binary conversion unit 407.

The binary conversion unit 407 comprises a comparator 411 and a binary data output unit 412. The corrected density data $D_{m,n}$ obtained by the density information correcting unit 405 and the binary conversion threshold TH obtained as described above are applied to the comparator 411. Then, binary data $O_{m,n}$ are obtained using the result of the collation between these two values. That is, the comparator 411 determines whether picture elements are black or white as follows:

$O_{m,n} =$ 255 (black picture elements) when $D_{m,n}' > TH$

$O_{m,n} =$ 0 (white picture elements) when $D_{m,n} \leqq TH$

The output $O_{m,n}$ of the comparator 411 takes either the maximum value "255" or the minimum value "0", and then transmits it to the binary data output unit 412. The binary data output unit 412 outputs a signal "1" (black picture element) when $O_{m,n}$ is "255", and a signal "0" (white picture element) when $O_{m,n}$ is "0".

Binary data $O_{m,n}$ obtained by the comparator 411 are transmitted to the binary conversation error operation unit 406. The binary conversion error operation unit 406 obtains an error value generated by the binary process of a target picture element $P_{m,n}$, and comprises an adder 413. The adder 413 receives modified density data $D_{m,n}$ of a target picture element $P_{m,n}$ obtained by the density information correcting unit 405, and also receives $-O_{m,n}$, that is, a sign-inverted value of the binary data $O_{m,n}$ which is the output of comparator 411.

That is, the adder 413 obtains the difference between corrected density data $D_{m,n}$ and binary data $O_{m,n}$, and the result is referred to as a binary conversion error $E_{m,n}$ (= $D_{m,n}' - O_{m,n}$) generated by a binary conversion process of a target picture element $P_{m,n}$. The binary conversion error value is stored at a corresponding position in the binary conversion error storage unit 403.

The above described procedure is repeated in the primary and secondary scanning directions alternately, and the binary data output unit 412 outputs "1" or "0" sequentially, thereby providing a gray-scale pseudo image in the binary representation.

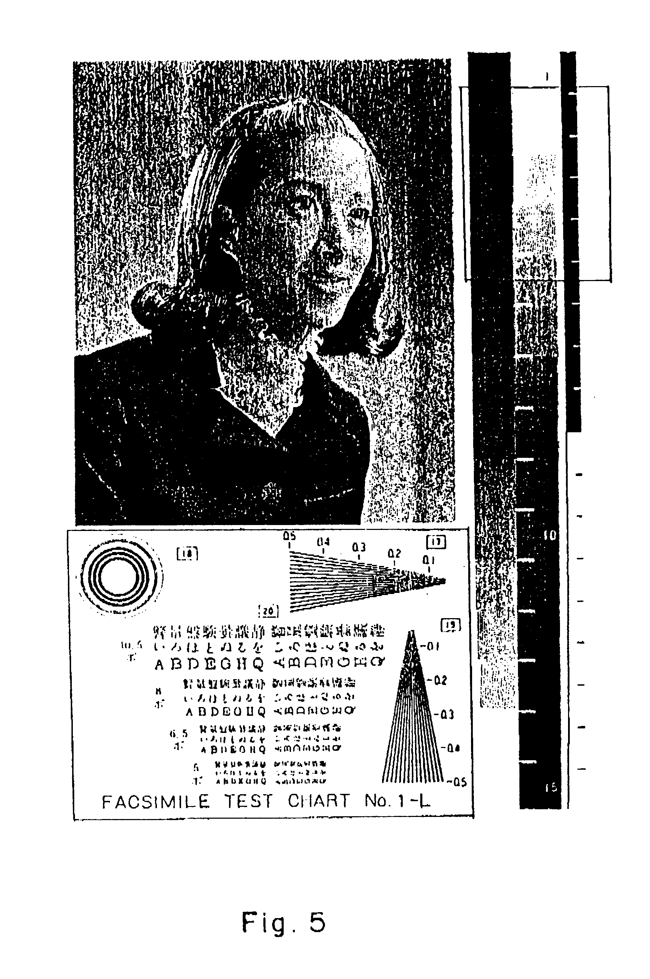

Figure 5 shows a result provided by the present invention. Process data in an example in Figure 5 are shown as follows:

(1) Original image data:
240 (dpi),
64-step gradation (0:white - 3F:black)
(2) Contents of processes:
/*Image Processing Source File: min 9.c*/
Contents of the look-up table 409:

$$\text{conv } [32] = \{ 63, 20, 24, 28, 31, 31, 31, 31, 31, 31, 31,$$
$$31, 31, 31, 31, 31, 31, 31, 31, 31, 31, 31,$$
$$31, 31, 31, 31, 31, 31, 30, 29, 28, 27 \}$$

(3) Printout: 240 (dpi), FMLBP111

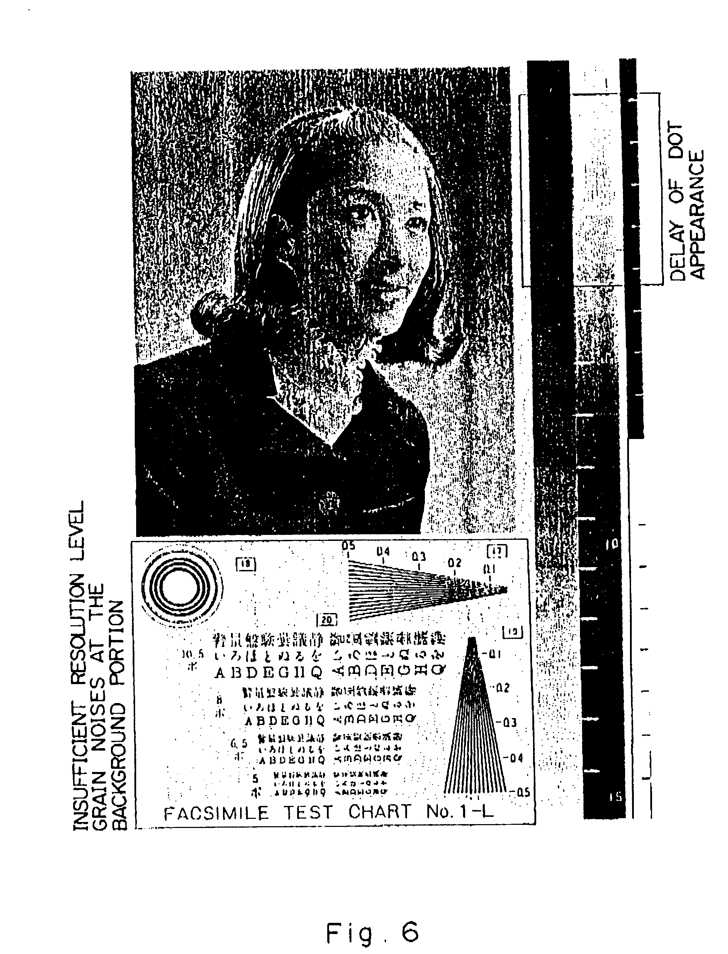

Figure 6 explains a result of a process in the conventional minimized average error method. Process data for an example in Figure 6 are as follows:

(1) Original image data:
240 (dpi),
64-step gradation (0: white - 3F: black)
(2) Contents of processes:
/*Image Processing Source File: min.c*/
Weight coefficient matrix ($K_{m,n}$)

| 1 | 3 | 5 | 3 | 1 |
|---|---|---|---|---|
| 3 | 5 | 7 | 5 | 3 |
| 5 | 7 | * |   |   |

A value of a weight coefficient is determined according to the embodiment in "A Survey of Techniques for the Display of Continuous Tone Pictures on Bilevel Displays".

$$\text{An average error} = \Sigma (K_{m,n} \cdot E_{m,n})/K_{m,n}$$

(3) Printout: 240 (dpi), FMLBP111

As is clearly seen by comparing Figures 5 and 6, the present invention improves the productivity (resolution) of drawings containing characters. Figure 5 shows the background with grain noise completely cleared. The delay in dot appearance is much improved. In copying a photograph, a more natural image is produced, as shown in Figure 5.

In the present embodiment, when the binary conversion threshold setter 408 refers to a plurality of original image density data to obtain a binary conversion threshold TH, an average value of original image density data of nine picture elements including a target picture element is used, but an average value of original image density data of surrounding picture elements can also be used in a wider range.

A binary conversion error value referred to by the average error operation unit 404 can be calculated using data of a wider range.

It is obvious that the quantizing gradation is not limited to the range "0" - "255". If the quantizing gradation is changed, the contents of the look-up table 409 must be modified appropriately.

Furthermore, the intensity of output picture elements can be adjusted by specifying the contents of the look-up table 409.

In the present invention, a binary conversion threshold can be obtained in an easy process where the look-up table 409 can be referred to using original image density data. Therefore, a great number of picture elements can be processed at a high speed.

Next, an embodiment of the operational error reducer 107 in the binary conversion processing unit in the minimized average error method 103 is described as follows:

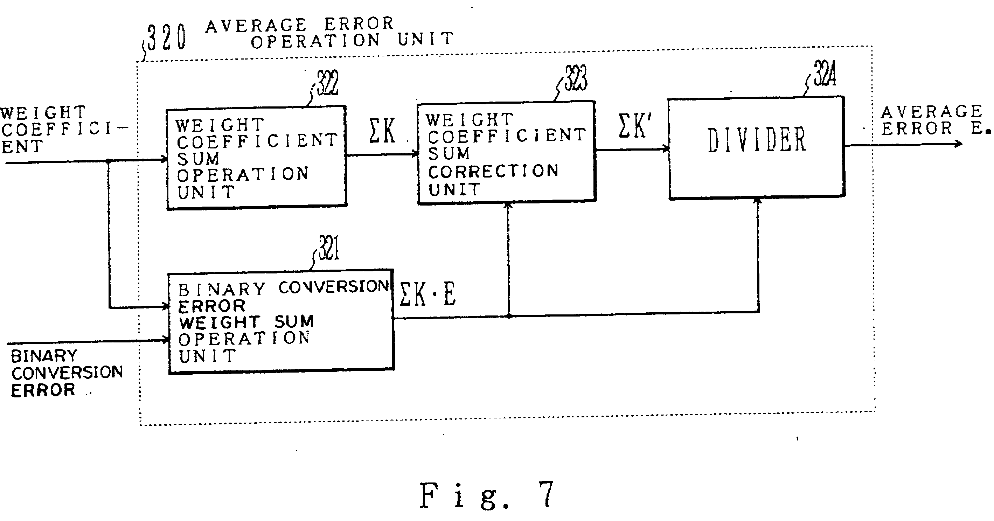

Figure 7 shows a configuration of the first embodiment of the average error operation unit (320 in Figure 3). The binary conversion error weight sum operation unit 321 calculates a sum of the products (a sum of binary conversion error weight values) of a binary conversion error of each surrounding picture element represented in integer ($E_{m-1,n-1}$; $E_{m-1,n}$; $E_{m-1,n+1}$; and $E_{m,n-1}$) multiplied by a weight coefficient ($K_{m-1,n-1}$; $K_{m-1,n}$; $K_{m-1,n+1}$; and $K_{m,n-1}$) as shown in the following expression:

$$\Sigma K \cdot E = K_{m-1,n-1} \cdot E_{m-1,n-1} + K_{m-1,n} \cdot E_{m-1,n}$$
$$+ K_{m-1,n+1} \cdot E_{m-1,n+1} + K_{m,n-1} \cdot E_{m,n-1}$$

The weight coefficient sum operation unit 322 calcutates a sum of weight coefficients in the following expression:

$$\Sigma K = K_{m-1,n-1} + K_{m-1,n} + K_{m-1,n+1} + K_{m,n-1}$$

As a weight coefficient is fixed regardless of the position of a target picture element, the weight coefficient sum operation unit 322 can be skipped if the reference range (number of picture elements surrounding a target picture element) is fixed as four and the value of $\Sigma K$ is calculated in advance. However, it cannot be skipped when the number of surrounding picture elements is 3, 4, 5, or variable optionnally, or when the value of a weight coefficient is changed.

The weight coefficient sum modifier 323 modifies a sum $\Sigma K$ of weight coefficients based on the value of a sum of binary conversion error weight values $\Sigma K.E$. The divider 324 divides a sum $\Sigma$ of binary conversion error weight values $\Sigma K.E$ by a sum of weight coefficients $\Sigma K'$ modified by the weight coefficient sum modifier, and then outputs the result as an average error value Em.

In the binary conversion process utilized in the minimized average error method, decimal positions are conventionally ignored for a high speed process in calculating an average error by the divider 324 and a remainder is truncated. Therefore, when no correction is applied to the binary conversion process an operational error as much as 0.5 - 0.99 due to the truncation is caused, thus deteriorating the gradation of a gray-scale pseudo image compared with an image given by a real number operation. Accordingly, modification is made on a sum of weight coefficients $\Sigma K$ to $\Sigma K'$ in the weight coefficient sum modifier 323 such that an error value is equal to or smaller than 0.5 with a remainder even truncated.

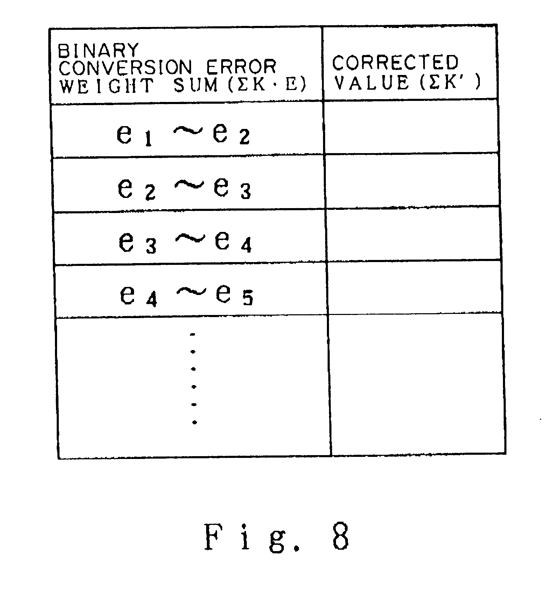

Figure 8 shows a table for correcting a total sum of weigth coefficients $\Sigma K$ to a corrected value $\Sigma K'$. The table stores corrected values of a sum of weight coefficients ($\Sigma K'$) for each range of values of a sum of binary conversion error conversion weights ($\Sigma K.E$).

An average error is obtained in the following expression using a corrected value of a sum of weight coefficients $\Sigma K'$ provided by the table, thus reducing an error by truncation to a value equal to or smaller than 0.5.

$$Em = \Sigma K \cdot E / \Sigma K'$$

Each picture element can be binary-conversion processed with an error equal to or less than 0.5 by performing the above described procedure sequentially on all picture elements.

The reference range (number of surrounding picture elements) of a binary conversion error, minimum density 0, maximum density 255, and threshold 255 of a binary conversion process in the average error operation unit 320 are not limited as they are described here.

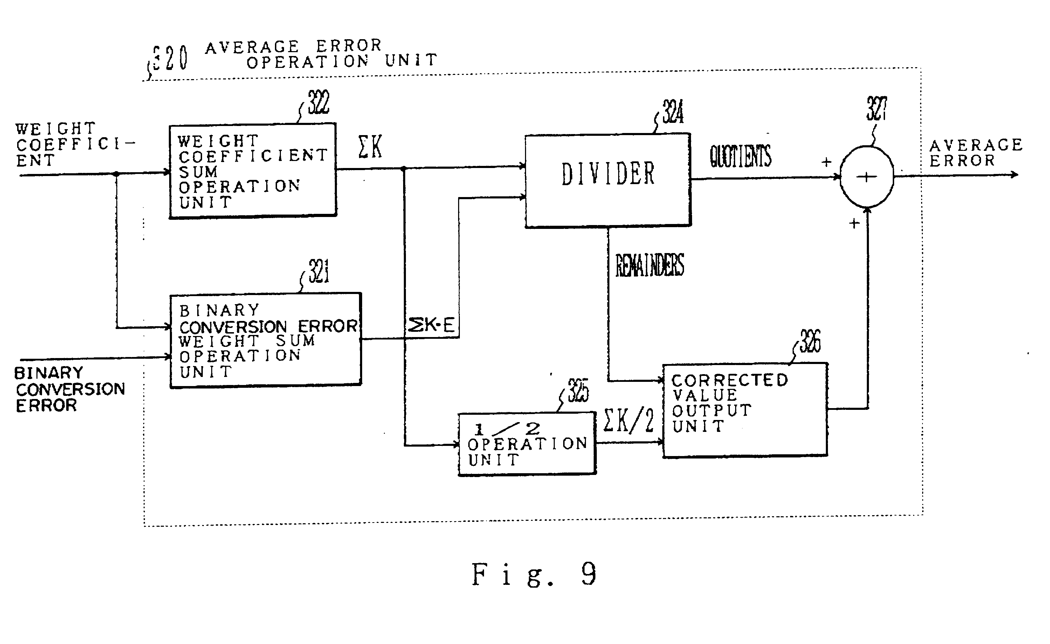

Figure 9 shows a configuration of the second embodiment of the average error operation unit. Parts equivalent to those in Figure 7 are assigned corresponding symbols.

Figure 9 differs from the embodiment shown in Figure 7 in the that a value of a sum $\Sigma K$ of weight coefficients is not modified, and instead an average error can be kept as plus one or as is by rounding up the value equal to or larger than 0.5 or 0.6 depending on whether the remainde of the division by the divider 324 is larger or smaller than 1/2 of the divisor (a sum of weight coefficients).

In Figure 9, a 1/2 operation unit 325 divides a sum $\Sigma K$ of weight coefficients in half. Actually, it can comprise a 1-bit shift unit. A modified value output unit 326 collates a remainder of the following division (operated by

the divider 324)

$$\Sigma K \cdot E / \Sigma K$$

with $\Sigma K/2$ obtained by the 1/2 operation unit 325, and outputs +1 when the remainder is equal to or larger than $\Sigma K/2$ and output 0 when the remainder is maller than $\Sigma K/2$.

An adder 327 receives a quotient of $\Sigma K.E/\Sigma K$ calculated by the divider 324, and also receives a modified value provided by the modified value output unit 326, and then adds these two values. Thus, a remainder is rounded up when it is larger than half of a divisor, and si otherwise truncated. Accordingly, the truncation error value can be kept equal to or less than 0.5, thus eliminating the deterioration in gradation.

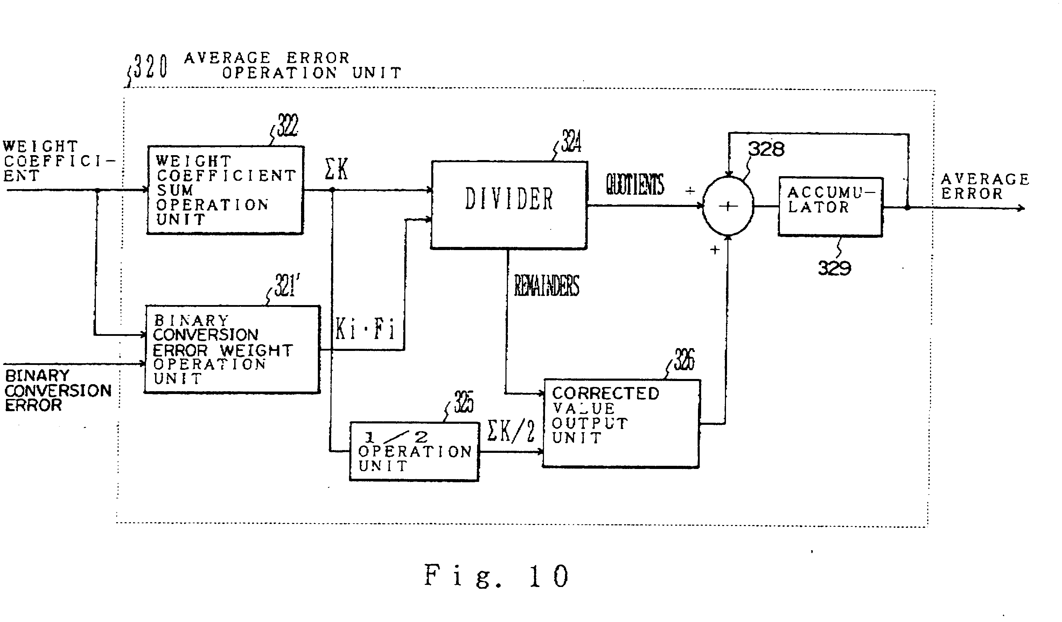

Figure 10 showns a configuration of the third embodiment of the average error operation unit. All parts identical to those shown in Figure 7 are assigned the corresponding symbols.

Figure 10 is different from the embodiment shown in Figure 7 in the following points:

(1) A sum of weight coefficients $\Sigma K$ is not modified.

(2) A binary conversion error weight Ki.Ei is calculated as a product of a weight coefficient multiplied by a binary conversion error of each surrounding picture element, but a sum of binary conversion error weight value Ki.Ei is not calculated.

(3) The divider 324 divides each binary conversion error weight $\Sigma Ki.Ei$ by a sum $\Sigma K$ of weight coefficients.

(4) A modified value (+1 or 0) is outputted depending on whether a remainder of a division is larger or smaller than half of divisor (a sum of weight coefficients), and then the value equal to or larger than 0.5 or 0.6 rounded up.

(5) An average error value Em is obtained by obtained a quotient of a binary conversion error weight value Ki.Ei divided by a sum of weight coefficients $\Sigma K$ and accumulating a remainder after rounding up the value equal to or larger than 0.5 or 0.6, or otherwise rounding it down.

In Figure 10, the binary conversion error weight operation unit 321 caclulates a binary conversion error weight value Ki.Ei, that is, a product of a weight coefficient Ki of by a binary conversion error Ei. The weight coefficient sum operation unit 322 calculates a sum $\Sigma K$ of weight coefficients. The divider 324 divides a binary conversion error weight value Ki.Ei by a sum $\Sigma K$ of weight coefficients.The 1/2 operation unit 325 divides a sum $\Sigma K$ of weight coefficients in half. Then, the modified value output unit 326 collates a remainder of the following division

$$Ki \cdot Ei / \Sigma K$$

(performed by the divider 324) and $\Sigma K/2$. Then, it outputs +1 when the remainder is equal to or larger than $\Sigma K/2$ and outputs 0 when the remainder is smaller than $\Sigma K/2$. An adder 328 accumulates a quotient of a division Ki.Ei/$\Sigma K$ and a remainder after rounding up the value equal to or larger than 0.5 or 0.6, or otherwise rounding down.

As described above, a remainder of a division is accumulated such that the remainder is rounded up when it is equal to or larger than half of a divisor, thus reducing the resultant truncation error to equal to or smaller than 0.5 and preventing the deterioration in gradation.

The present invention is thus described with some embodiments, and it can be modified in various appropriate forms to meet requirements of each application.

The present invention is applicable widely in various devices for processing digital images such as a digital copier, image scanner, facsimile, etc. for obtained gray-scale pseudo images in binary processes.

## Claims

1. An image processing device comprising:

   a quantizing means for quantizing image input;

   a binary conversion processing means utilized in a minimized average error method for binary-conversion processing a gray-scale image using the minimized average error method; and

   a binary conversion threshold storing means for storing a binary conversion threshold corresponding to quantized original image density data.

2. An image processing device comprising:

   a quantizing means for quantizing image input;

   a binary-conversion processing means utilized in a minimized average error method for binary-conversion processing a gray-scale image using the minimized average error method; and

   a binary conversion threshold setting means for obtaining a corresponding binary conversion threshold from said binary conversion threshold storing means using quantized original image density data received from said binary-conversion processing means in said minimized average error method, and for sending the binary conversion threshold to said binary-conversion processing means.

3. An image processing device comprising:

a quantizing means for quantizing image input;

a binary-conversion processing means utilized in a minimized average error method for binary-conversion processing a gray-scale image using the minimized average error method;

a binary conversion threshold storing means for storing a binary conversion threshold corresponding to quantized original image density data; and

a binary conversion threshold setting means for obtaining a corresponding binary conversion threshold from said binary-conversion threshold storing means using quantized original image density data received from said binary-conversion processing means utilized in said minimized average error method, and for sending the binary-conversion threshold to said binary-conversion-processing means.

4. An image processing device according to Claim 3, wherein

said binary conversion threshold setting means obtains said binary conversion threshold using quantized original image density data on each picture element to perform a binary conversion process on said picture element.

5. An image processing device according to Claim 3, wherein

said binary conversion threshold setting means obtains said binary conversion threshold using an average value of quantized original image density data of a target picture element and a plurality of specified picture elements surrounding said targert picture element to perform a binary conversion process on a single picture element.

6. An image processing unit according to Claim 3, wherein

said binary-conversion processing means in said minimized average error method comprises an operational error reducing means for reducing operational errors associated with average error operation.

7. An image processing device comprising:

a quantizing means for quantizing image input; and

a binary-conversion processing means utilized in a minimized average error method for binary-conversion processing a gray-scale image using the minimized average error method,

said binary-conversion processing means utilized in a minimized average error method comprising an operational error reducing means for reducing operational errors associated with average error operation.

8. An image processing method comprising obtaining:

a step for obtaining a predetermined binary conversion threshold using quantized original image density data; and

a step for performing a binary process on a picture element in the minimized average error method using the obtained binary conversion threshold as a threshold.

9. An image processing method for binary-conversion processing density information of each picture element of an original image in the minimized average error method, comprising:

a step for reducing operational errors associated wiht average error operation.

Fig. 1

Fig. 2

Fig. 3

Fig. 4

GRAY-SCALE PSEUDO IMAGE

Fig. 5

Fig. 6

AVERAGE ERROR E.

320 AVERAGE ERROR OPERATION UNIT

32A

DIVIDER

$\Sigma K'$

323

WEIGHT COEFFICIENT SUM CORRECTION UNIT

$\Sigma K$

322

WEIGHT COEFFICIENT SUM OPERATION UNIT

321

BINARY CONVERSION ERROR WEIGHT SUM OPERATION UNIT

$\Sigma K \cdot E$

WEIGHT COEFFICIENT

BINARY CONVERSION ERROR

Fig. 7

| BINARY CONVERSION ERROR WEIGHT SUM $(\Sigma K \cdot E)$ | CORRECTED VALUE $(\Sigma K')$ |
|---|---|
| $e_1 \sim e_2$ | |
| $e_2 \sim e_3$ | |
| $e_3 \sim e_4$ | |
| $e_4 \sim e_5$ | |
| $\vdots$ | |

F i g. 8

Fig. 9 — Block diagram of AVERAGE ERROR OPERATION UNIT 320.

**320 AVERAGE ERROR OPERATION UNIT**

- **WEIGHT COEFFICIENT** → **WEIGHT COEFFICIENT SUM OPERATION UNIT (322)** → $\Sigma K$ → **DIVIDER (324)**
- **BINARY CONVERSION ERROR** → **BINARY CONVERSION ERROR WEIGHT SUM OPERATION UNIT (321)** → $\Sigma K \cdot E$
- **DIVIDER (324)** → QUOTIENTS → (327) + → **AVERAGE ERROR**
- **DIVIDER (324)** → REMAINDERS → **CORRECTED VALUE OUTPUT UNIT (326)**
- **1/2 OPERATION UNIT (325)** → $\Sigma K / 2$ → **CORRECTED VALUE OUTPUT UNIT (326)** → (327) +

Fig. 9

EP 0 481 808 A2

320 AVERAGE ERROR OPERATION UNIT

Fig. 10